# FASCICULE DE BREVET EUROPEEN

(11) **EP 0 536 014 B1**
(45) Date de publication et mention de la délivrance du brevet: **01.03.1995**
(21) Numéro de dépôt: 92402437.5
(22) Date de dépôt: 07.09.1992
(51) Int. Cl.: B60R 25/08

(54) **Maître-cylindre verrouillable**
Verriegelbarer Hauptbremszylinder
Lockable main cylinder

(30) Priorité: 30.09.1991 IT TO910733
(43) Date de publication de la demande: 07.04.1993
(73) Titulaire: AlliedSignal Freni S.p.A., 70026 Modugno (IT)
(72) Inventeur: Tribuzio, Pasquale, I-70032 Bitonto (Bari) (IT); Manzo, Vincenzo, I-70026 Modugno (Bari) (IT)
(74) Mandataire: Bentz, Jean-Paul

(56) Documents cités:
- EP-A- 0 402 603
- WO-A-91/11348
- US-A- 4 040 675
- US-A- 4 873 824

## Description

La présente invention concerne un maître-cylindre dont au moins une partie des composants peut être verrouillée en position de travail.

Un tel maître-cylindre trouve son application notamment dans les circuits hydrauliques de freinage des véhicules automobiles, pour lesquels il est souvent souhaitable de maintenir les freins serrés dans certaines conditions, soit pour faire office de frein de parc, soit pour faire office d'antivol.

Ce maître-cylindre peut également, pour faire office alors uniquement d'antivol, constituer un émetteur d'embrayage. Cependant, il sera décrit ci-après dans son application aux circuits hydrauliques de freinage dans une version de type tandem.

On connaît de US-A-4 873 824 un mécanisme de verrouillage des freins disposé entre le servomoteur et le maître-cylindre.

Un tel mécanisme présente notamment l'inconvénient d'augmenter très sensiblement la longueur de l'ensemble servomoteur-maître-cylindre, alors que les constructeurs d'automobiles désirent, au contraire, diminuer la taille des composants.

L'invention a donc pour but un tel maître-cylindre verrouillable utilisant les composants traditionnels du système de freinage et ne présentant pas le défaut sus-mentionné.

L'invention concerne donc un maître-cylindre comprenant un corps comportant un alésage dans lequel coulisse, de façon étanche, au moins un piston déplaçable entre une position de repos et au moins une position de travail et déterminant au moins une chambre de pression reliée à un circuit fluidique d'utilisation, ce piston présentant une gorge périphérique.

Selon l'invention, un doigt actionné par un moyen extérieur est susceptible de pénétrer dans la gorge pour verrouiller le piston dans une de ses positions.

De préférence, le moyen extérieur est un moteur électrique et le doigt est actionné par le moteur, soit en translation, dans un alésage pratiqué dans le corps soit en rotation pour constituer une vis emboîtée dans l'arbre du moteur et coopérant de façon étanche avec un perçage taraudé pratiqué dans le corps.

L'invention sera mieux comprise et d'autres buts, avantages et caractéristiques de celle-ci apparaîtront plus clairement à la lecture de la description qui suit d'un mode de réalisation donné à titre non limitatif et à laquelle est jointe deux planches de dessins sur lesquelles :
- Les Figures 1 et 2 représentent un maître-cylindre tandem conforme à la présente invention, respectivement en position déverrouillée et en position verrouillée, tendant à maintenir serrés les freins d'un seul des deux circuits hydrauliques, et
- Les Figures 3 et 4 représentent un autre mode de réalisation de l'invention, respectivement en position déverrouillée et en position verrouillée, tendant à maintenir serrés les freins des deux circuits hydrauliques.

En référence maintenant aux Figures, on a représenté un maître-cylindre tandem conventionnel constitué par un corps 12 dans lequel a été pratiqué un alésage borgne 14. Deux pistons 16, 18 coulissent dans cet alésage 14 et déterminent deux chambres de pression 20, 22. Ces chambres 20, 22 sont reliées au repos à un réservoir de fluide sous basse pression (non représenté) par des conduits 24, 26, fermés dès lors que les pistons 16 et 18 se meuvent.

Les deux chambres 20, 22 sont également reliées respectivement à un circuit hydraulique d'utilisation comprenant chacun au moins un moteur hydraulique de frein, actionné par la pression engendrée dans les chambres 20 et 22 lorsque les pistons 16 et 18 sont dans leur position de travail.

Des ressorts 28, 30 ramènent l'équipage au repos, tandis que le maître-cylindre est actionné au moyen d'une tige (non représentée) prenant appui sur une paroi 32 de l'un 18 des pistons.

Le fonctionnement du maître-cylindre proprement dit ne sera pas repris ici car il est bien connu de l'homme du métier.

Conformément à l'invention, un perçage 40 est pratiqué dans le corps 12, par exemple dans un axe perpendiculaire à l'axe longitudinal du maître-cylindre.

Un doigt 42 est disposé de façon étanche dans ce perçage 40 et est susceptible de faire saillie à l'intérieur du corps 12 du maître-cylindre.

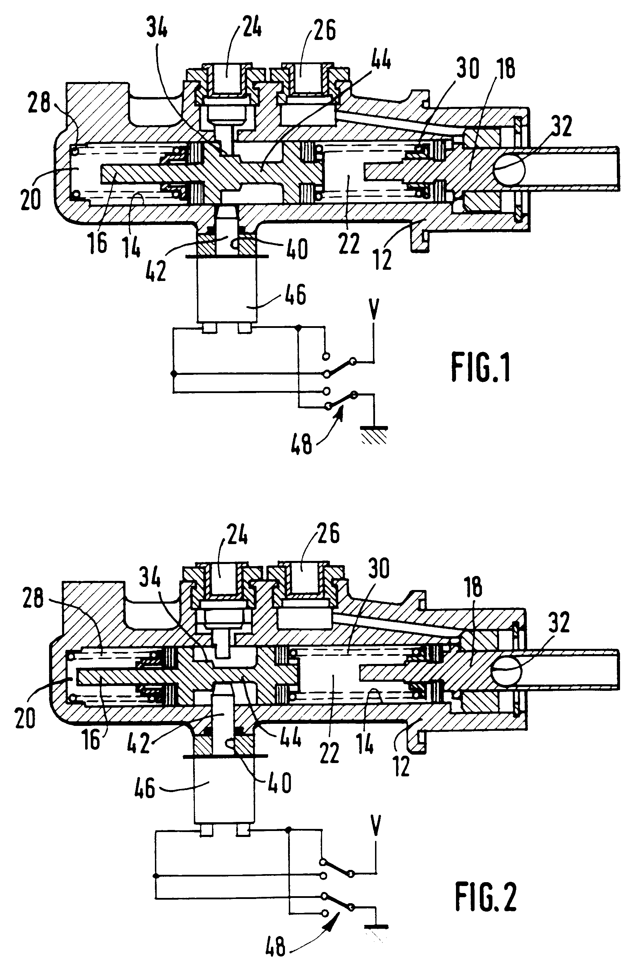

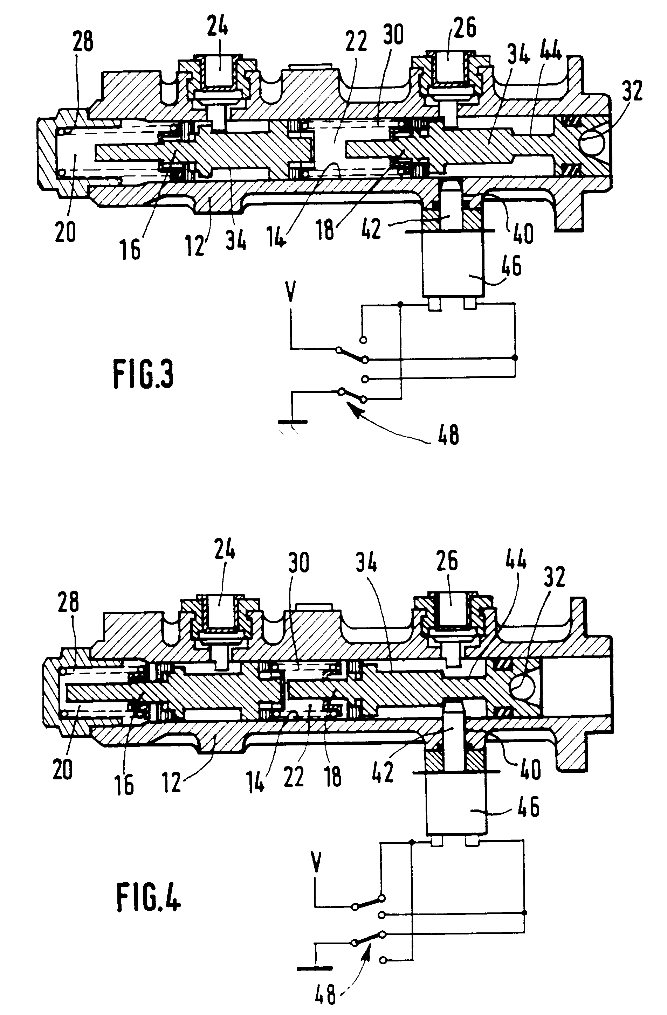

Le piston 16 (Figures 1, 2) ou 18 (Figures 3, 4) présente sur sa périphérie une gorge 44, éventuellement étagée.

Dans les exemples représentés, le perçage 40 est un alésage et le doigt 42 coulisse de façon étanche dans cet alésage à la manière d'un piston. Le perçage 40 peut également être taraudé et le doigt 42 être fileté. Un moteur électrique 46 assure le mouvement du doigt 42, en translation dans le premier cas ou en rotation dans le second. Le doigt 42 peut également être constitué directement par l'arbre du moteur électrique.

Un commutateur inverseur électrique 48 permet de faire fonctionner le moteur 46 dans un sens ou dans l'autre. De préférence, un interrupteur de fin de course sera prévu pour arrêter le moteur à la fin de son action.

Dans les exemples représentés également, la ré-alimentation en fluide des chambres de pression 20, 22 est prévue par l'intermédiaire de la gorge 34. Un simple étagement de cette gorge 34 pourra faire office de gorge 44.

Le fonctionnement en frein de parc ou en antivol est le suivant. Avant de quitter son véhicule, le conducteur appuie sur la pédale de frein, ce qui a pour effet de déplacer les pistons 16, 18 dans leur position de travail (vers la gauche sur les Figures). En manoeuvrant le commutateur-inverseur 48, il met en route le moteur électrique 46. Le doigt 42 se déplace alors et fait saillie dans le corps jusqu'à entrer en contact avec le piston dans la gorge 44, alors en regard du doigt 42. L'interrupteur de fin de course déconnecte alors le moteur électrique. Le conducteur peut relâcher la pédale de frein, le piston portant la gorge 44 reste alors bloqué en position de travail par le doigt 42 (comme représenté Figures 2 et 4). Si la gorge 44 est réalisée de façon étagée, on comprendra aisément que le piston portant la gorge 44 reste bloqué par le doigt 42 dans une position qui est fonction de l'étage de la gorge 44 se trouvant en face du doigt 42. Le piston pourra ainsi occuper plusieurs positions de travail verrouillées.

Pour déverrouiller le système, le conducteur devra également re-appuyer sur la pédale de frein pour contrecarrer l'effort exercé par le piston sur le doigt 42, puis manoeuvrer le commutateur-inverseur 48 pour actionner le moteur électrique 46 en sens inverse. Le doigt 42 se retire alors pour ne plus faire saillie dans le corps 12.

Dans un exemple de réalisation, on a utilisé avec succès un moteur à courant continu 12 volts, 5 watts. Lorsqu'un tel maître-cylindre est utilisé en tant qu'antivol, il est nécessaire de prévoir une clef d'accès au commutateur-inverseur 48, par exemple électronique, et d'interdire l'accès au câblage électrique du moteur par un moyen dissuasif quelconque.

Dans l'exemple représenté Figures 1 et 2, seules les roues dont les freins sont reliés à la chambre de pression 20 peuvent être ainsi bloquées, tandis que dans l'exemple représenté Figures 3 et 4, c'est l'ensemble des roues qui peuvent être bloquées.

Bien que seuls certains modes de réalisation de l'invention aient été décrits et représentés, il est clair que l'homme du métier pourra apporter de nombreuses modifications.

Notamment, l'actionnement du doigt 42 dans le perçage 40 pourra être prévu par tout moyen extérieur au maître-cylindre, telle la commande électrique qui vient d'être décrite, ou bien par une commande électro-magnétique permettant de bander un ressort qui pourra faire pénétrer le doigt 42 dans le corps 12 jusqu'à la gorge périphérique 44 pour verrouiller le piston lors d'une tentative de faire fonctionner le frein.

L'invention est également applicable, de façon alternative ou additionnelle à la réalisation décrite, à un maître-cylindre constituant un émetteur d'embrayage, le doigt 42 bloquant alors le piston et l'embrayage qu'il commande en position débrayée.

De même, on pourra prévoir de disposer le perçage 40 de façon à ce qu'il débouche dans une des chambres de pression 20 ou 22. L'actionnement du moteur électrique 46 fera alors pénétrer le doigt 42 dans cette chambre, interdisant alors l'usage du maître-cylindre, qui constituera alors avantageusement dans ce cas un émetteur d'embrayage.

## Revendications

1. Maître-cylindre comprenant un corps (12) comportant un alésage (14) dans lequel coulisse de façon étanche, au moins un piston (16, 18) déplaçable entre une position de repos et au moins une position de travail et déterminant au moins une chambre de pression (20, 22) reliée à un circuit fluidique d'utilisation, le dit piston (18, 16,) présentant une gorge périphérique (44), caractérisé en ce qu'un doigt (42) actionné par un moyen extérieur (46) est susceptible de pénétrer dans la dite gorge (44) pour verrouiller le dit piston dans une de ses positions.

2. Maître-cylindre selon la revendication 1, caractérisé en ce que la gorge périphérique (44) est reliée à un réservoir de fluide sous basse pression et en ce que le doigt (42) verrouille le dit piston dans une position de travail.

3. Maître-cylindre selon la revendication 2, caractérisé en ce que le dit moyen extérieur (46) est à commande électrique.

4. Maître-cylindre selon la revendication 2 ou 3, caractérisé en ce que le dit moyen extérieur est un moteur électrique (46) actionnant le doigt (42) en translation, le doigt (42) coulissant de façon étanche dans un alésage formé dans un perçage (40) pratiqué dans le dit corps (12).

5. Maître-cylindre selon la revendication 2 ou 3, caractérisé en ce que le dit moyen extérieur est un moteur électrique (46) et le doigt (42) est une vis emboîtée dans l'arbre du dit moteur (46) et coopérant de façon étanche avec un perçage (40) taraudé pratiqué dans le dit corps (12).

6. Maître-cylindre selon la revendication 4 ou 5, caractérisé en ce que le doigt (42) est constitué par l'arbre dudit moteur (46).

7. Maître-cylindre selon la revendication 4 ou 5, caractérisé en ce que le dit perçage (40) et le dit doigt (42) présentent un axe perpendiculaire à l'axe longitudinal du dit maître-cylindre.

8. Maître-cylindre selon l'une quelconque des revendications précédentes, caractérisé en ce que la dite gorge (44) est étagée de manière à déterminer plusieurs positions verrouillées du dit piston.

## Claims

1. Master cylinder comprising a body (12) comprising a bore (14) in which slides in leaktight manner, at least one piston (16, 18) movable between a rest position and at least one working position and defining at least one pressure chamber (20, 22) connected to an application fluid system, said piston (18, 16)
having a peripheral groove (44), characterised in that a finger (42) actuated by an external means (46) is capable of entering said groove (44) in order to lock said piston in one of its positions.

2. Master cylinder according to Claim 1, characterised in that the peripheral groove (44) is connected to a reservoir of fluid under low pressure and in that the finger (42) locks said piston in a working position.

3. Master cylinder according to Claim 2, characterised in that said external (46) means is electrically controlled.

4. Master cylinder according to Claim 2 or 3, characterised in that said external means is an electric motor (46) actuating the finger (42) in translation, the finger (42) sliding in leaktight manner in a bore formed in a drilling (40) made in said body (12).

5. Master cylinder according to Claim 2 or 3, characterised in that said external means is an electric motor (46) and the finger (42) is a screw housed in the shaft of said motor (46) and cooperating in leaktight manner with a tapped drilling (40) made in said body (12).

6. Master cylinder according to Claim 4 or 5, characterised in that the finger (42) is constituted by the shaft of said motor (46).

7. Master cylinder according to Claim 4 or 5, characterised in that said drilling (40) and said finger (42) have an axis perpendicular to the longitudinal axis of said master cylinder.

8. Master cylinder according to any of the preceding Claims, characterised in that said groove (44) is stepped so as to determine several locked positions of said piston.

## Patentansprüche

1. Hauptzylinder mit einem Körper (12), der eine Bohrung (14) aufweist, in der wenigstens ein Kolben (14, 18) in abgedichteter Weise gleitet, der zwischen einer Ruheposition und wenigstens einer Arbeitsposition verschiebbar ist und wenigstens eine Druckkammer (20, 22) festlegt, die mit einem Anwendungs-Fluidkreis verbunden ist, wobei der Kolben (18, 16) eine Umfangsauskehlung (44) aufweist, dadurch gekennzeichnet, daß ein von einem externen Mittel (46) betätigter Finger (42) in die Auskehlung (44) eindringen kann, um den Kolben in einer seiner Positionen zu verriegeln.

2. Hauptzylinder nach Anspruch 1, dadurch gekennzeichnet, daß die Umfangsauskehlung (44) mit einem Fluid-Vorratsbehälter unter niedrigem Druck verbunden ist und daß der Finger (42) den Kolben in einer Arbeitsposition verriegelt.

3. Hauptzylinder nach Anspruch 2, dadurch gekennzeichnet, daß das externe Mittel (46) elektrisch gesteuert ist.

4. Hauptzylinder nach Anspruch 2 oder 3, dadurch gekennzeichnet, daß das externe Mittel ein den Finger translatorisch betätigender Elektromotor (46) ist, wobei der Finger (42) in abgedichteter Weise in einer Bohrung gleitet, die in einem in den Körper (12) gebildeten Durchbruch (40) geformt ist.

5. Hauptzylinder nach Anspruch 2 oder 3, dadurch gekennzeichnet, daß das externe Mittel ein Elektromotor (46) ist und der Finger (42) eine Schraube ist, die in die Welle des Motors (46) eingefügt ist und in abgedichteter Weise mit einem mit Innengewinde versehenen Durchbruch (40) zusammenwirkt, der in dem Körper (12) angebracht ist.

6. Hauptzylinder nach Anspruch 4 oder 5, dadurch gekennzeichnet, daß der Finger (42) von der Welle des Motors (46) gebildet ist.

7. Hauptzylinder nach Anspruch 4 oder 5, dadurch gekennzeichnet, daß der Durchbruch (40) und der Finger (42) eine senkrecht zur Längsachse des Hauptzylinders verlaufende Achse aufweisen.

8. Hauptzylinder nach einem der vorhergehenden Ansprüche, dadurch gekennzeichnet, daß die Auskehlung (44) so abgestuft ist, daß mehrere Verriegelungspositionen des Kolbens festgelegt werden.
